# EUROPEAN PATENT APPLICATION

(11) **EP 4 804 732 A1**
(43) Date of publication of application: **09.09.2026**
(21) Application number: 24886058.7
(22) Date of filing: 11.10.2024
(51) Int. Cl.: H05G 1/32, H01J 35/14, G01N 23/2251

(54) **X-RAY INSPECTION APPARATUS AND INSPECTION METHOD THEREFOR**

(30) Priority: 30.10.2023 KR 20230146877
(71) Applicant: Sec Co., Ltd., Suwon-si, Gyeonggi-do 16648 (KR)
(72) Inventor: KWAK, Kyeong-Il, Yongin-si Gyeonggi-do 17079 (KR); SHIN, Hyeonbeom, Cheongju-si Chungcheongbuk-do 28760 (KR); KIM, Youngman, Suwon-si Gyeonggi-do 16685 (KR); MOON, Jinhyeok, Hwaseong-si Gyeonggi-do 18342 (KR); SOHN, Youjoo, Suwon-si Gyeonggi-do 16387 (KR); LEE, Taebyoung, Suwon-si Gyeonggi-do 16650 (KR)
(74) Representative: Dragotti & Associati S.P.A.
(86) International application number: PCT/KR2024/015399
(87) International publication number: WO 2025/095383

(57) **Abstract**

An X-ray inspection apparatus is disclosed. The apparatus comprises: an anode on which a target is provided; a cathode for emitting an electron beam at the target; a grid positioned toward a cathode side between the cathode and the anode; a power source unit for applying voltage to each of the cathode, the grid, and the anode; and a control unit. The control unit controls the power source unit such that a cathode voltage of a preset magnitude is applied to the cathode and an anode voltage of a preset magnitude is applied to the anode, and controls the power supply unit such that a grid voltage within a preset voltage range is selectively applied to the grid, thereby adjusting the amount of electron beam.

## Description

### [Technical Field]

The present disclosure relates to an X-ray inspection apparatus performing inspection by controlling a voltage of a grid in an X-ray tube, and an inspection method therefor.

### [Background Art]

As one of methods for identifying internal characteristics of an object without destroying the object, an X-ray inspection technique has been used. An X-ray inspection apparatus performing the X-ray inspection may be used for inspection of various objects such as a human body as well as a secondary battery.

The X-ray inspection apparatus is an apparatus inspecting an object to be inspected by emitting an electron beam to a target and using X-rays emitted from the target. The X-ray inspection apparatus may generate X-rays by using an X-ray tube. The X-ray tube may generally include a heater, a cathode, a grid, an anode, or the like. The target may be disposed on the anode, and the electron beam emitted from the cathode may be projected toward the anode through the grid and collide with the target.

For such an operation, a high voltage of about 100 kV is applied to the anode. A technical limitation exists in on/off control of such a high voltage at short intervals. In addition, when on/off control is performed on each of the heater, the cathode, the grid, and the anode, an unexpected discharge may occur, or a vacuum in the X-ray tube may be adversely affected.

As a result, a conventional X-ray inspection apparatus is unable to turn the electron beam itself on or off, and thus is unable to finely adjust X-ray emission. Accordingly, radiation exposure of an imaging target or a user is unable to be reduced.

Accordingly, to solve the above-described problem, an object of the present disclosure is to provide an X-ray inspection apparatus capable of performing inspection while precisely adjusting X-ray emission, and an inspection method therefor.

### [Disclosure of Invention]

### [Solution to Problem]

According to an embodiment of the present disclosure, provided is an X-ray inspection apparatus including: an anode on which a target is installed; a cathode for emitting an electron beam to the target; a grid positioned between the cathode and the anode and closer to the cathode; a power source unit configured to apply voltages to the cathode, the grid, and the anode, respectively; and a control unit, wherein the control unit is configured to control the power source unit to apply a cathode voltage of a predetermined magnitude to the cathode and to apply an anode voltage of a predetermined magnitude to the anode, and control the power source unit to adjust an amount of the electron beam emitted from the cathode and transferred toward the anode by selectively applying a grid voltage within a predetermined voltage range to the grid.

The control unit may be configured to adjust a magnitude of the grid voltage within a voltage range between a first voltage for blocking the electron beam and a second voltage for allowing the electron beam to pass, the first voltage may be a voltage having the same polarity as the cathode voltage and set to a magnitude at which the electron beam emitted from the cathode is blockable by a repulsive force generated by the grid, and the second voltage may be a voltage having the same polarity as the cathode voltage and set to a magnitude at which the electron beam emitted from the cathode is focused by a repulsive force generated by the grid and passes through the grid.

The apparatus may further include: a conveyor belt for conveying an object to be inspected, wherein the control unit may be configured to control the power source unit to alternately adjust the grid voltage to the first voltage and the second voltage during a section in which the object to be inspected passes through an inspection position, when the object to be inspected is conveyed to the inspection position by the conveyor belt in a state in which the cathode voltage is applied to the cathode and the anode voltage is applied to the anode.

The control unit may be configured to control the power source unit to alternately adjust the grid voltage within the predetermined voltage range based on a respiration cycle of a human body, which is an object to be inspected.

The power source unit may include: a first power source connected to the cathode; a second power source connected to a node between the first power source and the grid; and a third power source connected to the anode, the second power source may be a power source for providing a variable voltage within the predetermined voltage range, and the grid voltage may be a voltage having a magnitude obtained by summing a voltage of the first power source and a voltage of the second power source.

According to an embodiment of the present disclosure, provided is an inspection method for an X-ray inspection apparatus, the method including: applying an anode voltage of a predetermined magnitude and a cathode voltage of a predetermined magnitude to an anode and a cathode, respectively; and adjusting an amount of an electron beam emitted from the cathode and transferred toward the anode by selectively applying a grid voltage within a predetermined voltage range to a grid positioned between the cathode and the anode and closer to the cathode.

The adjusting of the amount of the electron beam may include adjusting a magnitude of the grid voltage within a voltage range between a first voltage for blocking the electron beam and a second voltage for allowing the electron beam to pass, the first voltage may be a voltage having the same polarity as the cathode voltage and set to a magnitude at which the electron beam emitted from the cathode is blockable by a repulsive force generated by the grid, and the second voltage may be a voltage having the same polarity as the cathode voltage and set to a magnitude at which the electron beam emitted from the cathode is focused by a repulsive force generated by the grid and passes through the grid.

The adjusting of the amount of the electron beam may include alternately adjusting the grid voltage to the first voltage and the second voltage during a section in which the object to be inspected passes through an inspection position, when the object to be inspected is conveyed to the inspection position by a conveyor belt in a state in which the cathode voltage is applied to the cathode and the anode voltage is applied to the anode.

The adjusting of the amount of the electron beam may include alternately adjusting the grid voltage within the predetermined voltage range based on a respiration cycle of a human body, which is an object to be inspected.

### [Brief Description of Drawings]

FIG. 1 is a view illustrating an example of an exterior of an X-ray tube used in an X-ray inspection apparatus according to an embodiment of the present disclosure.
FIG. 2 is a view illustrating a configuration of the X-ray inspection apparatus according to an embodiment of the present disclosure.
FIGS. 3 and 4 are views illustrating an operation of the X-ray inspection apparatus according to an embodiment of the present disclosure.
FIG. 5 is a view illustrating a detailed configuration of a power source unit used in the X-ray inspection apparatus according to an embodiment of the present disclosure.
FIG. 6 is a view illustrating an example of an exterior of the X-ray inspection apparatus according to an embodiment of the present disclosure.
FIGS. 7 to 9 are views illustrating a control operation of the X-ray inspection apparatus according to an embodiment of the present disclosure.
FIG. 10 is a flowchart illustrating an inspection method according to an embodiment of the present disclosure.

### [Mode for Invention]

Hereinafter, terms used in the present disclosure will be briefly described first, and the present disclosure will then be described in detail.

Terms used in the present specification are selected from currently widely used general terms as far as possible while considering functions in the present disclosure. However, the terms may vary according to intentions of those skilled in the art, precedents, emergence of new technology, or the like. In addition, in a specific case, terms arbitrarily selected by an applicant may also be present. In this case, the meanings of such terms will be described in detail in corresponding descriptions of the present disclosure. Accordingly, the terms used in the present disclosure should be defined based on the meanings of the terms and the contents throughout the present disclosure, rather than based on simple names of the terms.

Terms such as "first" and "second" may be used to describe various components. However, the components should not be construed as being limited by these terms. The terms are used only to distinguish one component from another component.

A singular expression includes a plural expression unless the context clearly indicates otherwise. In the present application, terms such as "include" or "be configured" are intended to designate the presence of features, numbers, steps, actions, components, parts, or combinations thereof described in the specification, and should be understood as not precluding the presence or addition of one or more other features, numbers, steps, actions, components, parts, or combinations thereof.

An expression such as "at least one of A or B" should be understood as indicating any one of "A," "B," or "A and B."

In the present disclosure, a "module" or a "unit" may perform at least one function or operation, and may be implemented as hardware, software, or a combination of hardware and software. In addition, a plurality of "modules" or a plurality of "units" may be integrated into at least one module and implemented as one or more processors (not shown), except for a "module" or a "unit" that needs to be implemented as specific hardware.

Hereinafter, embodiments of the present disclosure will be described in detail with reference to the accompanying drawings to allow those skilled in the art to which the present disclosure pertains to easily implement the present disclosure. However, the present disclosure may be implemented in various different forms and is not limited to the embodiments described herein. In addition, in drawings, parts unrelated to the description are omitted to clearly describe the present disclosure, and similar reference numerals are assigned to similar portions throughout the specification.

Hereinafter, one or more embodiments of the present disclosure will be described in more detail with reference to the accompanying drawings.

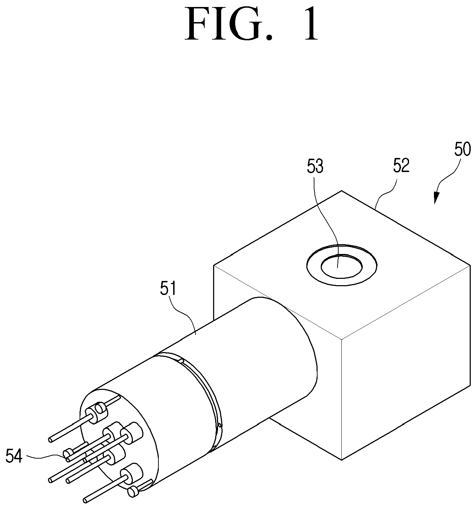

FIG. 1 is a view illustrating an example of an exterior of an X-ray tube used in an X-ray inspection apparatus according to an embodiment of the present disclosure. Referring to FIG. 1, an X-ray tube 50 may include an electron generation unit 51 and a vacuum chamber 52. A heater, a cathode, and a grid may be disposed inside the electron generation unit 51, and an anode may be disposed inside the vacuum chamber 52. A target may be installed on the anode.

A plurality of electrodes 54 connected to internal components may be exposed at one side of the electron generation unit 51. Each of the electrodes may be connected to a power source unit, and the power source unit may provide an electrical signal for each of the electrodes 54 according to control of a processor. When voltages are applied to the heater, the cathode, the grid, and the anode through the electrodes 54, respectively, the cathode may emit an electron beam, and the emitted electron beam may pass through the grid and be projected toward the target disposed on the anode inside the vacuum chamber 52. The electron beam colliding with the target may generate X-rays, and the generated X-rays may be emitted through a transmission window 53.

In a state in which predetermined voltages are applied to the heater, the cathode, and the anode, respectively, the X-ray inspection apparatus may adjust an amount of the electron beam transferred from the cathode toward the anode by adjusting a voltage applied to the grid. When the grid voltage is set to a specific voltage, the electron beam may not pass through the grid. Accordingly, X-ray generation may be blocked while maintaining voltages applied to the cathode, the anode, the heater, or the like as they are.

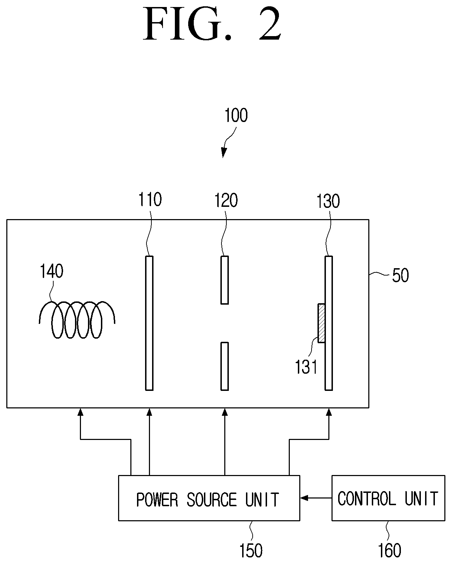

FIG. 2 is a view illustrating a configuration of the X-ray inspection apparatus according to an embodiment of the present disclosure. Referring to FIG. 2, an X-ray inspection apparatus 100 may include a cathode 110, a grid 120, an anode 130, a heater 140, a power source unit 150, and a control unit 160. FIG. 2 illustrates that the cathode 110, the grid 120, the anode 130, and the heater 140 are disposed in the X-ray tube 50, and the power source unit 150 and the control unit 160 are disposed outside the X-ray tube 50, which is only an example, and at least one of the power source unit 150 and the control unit 160 may be included together in the X-ray tube 50.

A target 131 may be installed on the anode 130. Detailed descriptions of a placement position, a placement form, a type, or the like of the target 131 are omitted.

The cathode 110 is a component for emitting an electron beam toward the anode 130.

The grid 120 may be disposed between the cathode 110 and the anode 130. Specifically, the grid 120 may be disposed closer to the cathode 110 with reference to a middle point between the cathode 110 and the anode 130.

The power source unit 150 is a component for providing electrical signals to various other components such as the cathode 110, the grid 120, the anode 130, and the heater 140.

The control unit 160 is a component for controlling operations of various components included in the X-ray inspection apparatus 100. As an example, the control unit 160 may control an operation of the power source unit 150, and may apply voltages having appropriate magnitudes to the cathode 110, the grid 120, the anode 130, the heater 140, or the like, respectively.

The control unit 160 may be implemented in various forms such as a central processing unit (CPU), a graphics processing unit (GPU), an accelerated processing unit (APU), a many integrated core (MIC), a digital signal processor (DSP), a neural processing unit (NPU), and other control logic. Although FIG. 2 illustrates only one control unit 160, the control unit 160 may also be implemented as a plurality of processors. In addition, although a memory is not illustrated in FIG. 2, at least one memory, which is implemented separately from the control unit 160 or integrated into the control unit 160, may be further included.

The control unit 160 may control the power source unit 150 to apply a cathode voltage of a predetermined magnitude to the cathode 110 and to apply an anode voltage of a predetermined magnitude to the anode 130. In addition, the control unit 160 may control the power source unit 150 to apply a voltage of an appropriate magnitude to the heater 140. When a voltage is applied to the heater 140 to heat the cathode 110 and voltages are applied to the cathode 110 and the anode 130, respectively, an electron beam may be emitted from the cathode 110.

The control unit 160 may control the power source unit 150 to selectively apply a grid voltage within a predetermined voltage range to the grid 120. According to variation of the grid voltage, an amount of the electron beam emitted from the cathode 110 and transferred toward the anode 130 may be adjusted. A range of the grid voltage may be variously set according to experiments. Specifically, switching to a first voltage or a second voltage may be selectively performed when the first voltage having a magnitude allowing the first voltage to block the electron beam and the second voltage having a magnitude allowing the second voltage to appropriately focus the electron beam and allow the electron beam to pass through the grid are determined. Alternatively, the control unit 160 may select one magnitude within a range equal to or greater than the first voltage and equal to or less than the second voltage, and may control a voltage unit 150 the power source unit 150 to provide a grid voltage having the selected magnitude.

The first voltage may be a voltage having the same polarity as the cathode voltage applied to the cathode 110 and set to a magnitude at which the electron beam emitted from the cathode 110 is blockable by a repulsive force generated by the grid 120.

The second voltage may be a voltage having the same polarity as the cathode voltage and set to a magnitude at which the electron beam emitted from the cathode 110 is focused by a repulsive force generated by the grid 120 and passes through the grid 120.

Magnitudes of the first voltage and the second voltage may be set differently according to various factors such as the cathode voltage, the anode voltage, and a distance. In general, when the cathode voltage is high, the grid voltage may also be set high.

For example, assuming that the cathode voltage for emitting an electron beam current of 500 µA is -1000 V, the electron beam current may be 500 µA when the grid voltage is -1100 V, and, assuming that the cathode voltage is -2000 V, the electron beam current may be 500 µA when the grid voltage is -2200 V.

Accordingly, when the electron beam current is 0 µA, the grid voltage may be applied by exceeding a threshold voltage, rather than applying the grid voltage as the threshold voltage. For example, when the cathode voltage is -1000 V and the grid voltage needs to be at least -1250 V for the electron beam current to be 0 µA (off), the first voltage may be set to a value having a margin relative to the threshold voltage, such as -1300 V, -1400 V, or -1500 V.

A voltage difference between the cathode voltage and the grid voltage may be variously implemented. For example, assuming that the cathode voltage is -500 V, the electron beam current may be 500 µA when the grid voltage is about -530 V, and, assuming that the cathode voltage is -500 V, the electron beam current may be 0 µA when the grid voltage is about -800 V. If the grid voltage is implemented as a floating voltage, pulse control may be performed by alternately controlling a second power source 152 connected to the grid voltage to -30 V or -300 V, thereby blocking the electron beam or allowing the electron beam to pass through the grid at 500 µA. As an example, although a difference between the cathode voltage and the grid voltage causing the electron beam current to be 0 µA may be about 200 V to 400 V according to the cathode voltage, the difference is not limited thereto, and may vary according to the various factors described above.

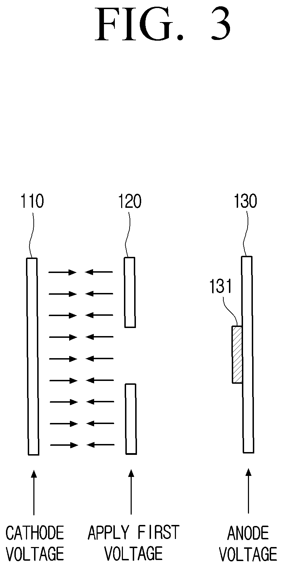

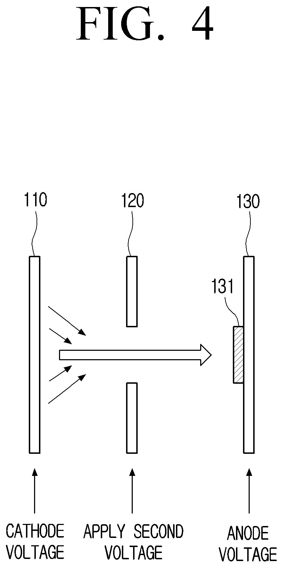

FIGS. 3 and 4 are views illustrating an operation of the X-ray inspection apparatus according to an embodiment of the present disclosure.

First, FIG. 3 illustrates that the first voltage is applied to the grid 120 in a state in which the cathode voltage and the anode voltage are each provided as fixed values. For example, when the anode voltage is determined within a range of about +40 kV to +150 kV and the cathode voltage is determined within a range of 0 kV to -1.2 kV, the grid voltage may be determined as a floating value of about 0 kV to -0.6 kV with reference to the cathode voltage.

Specifically, when the cathode voltage is -500 V and the anode voltage is 100 kV, the first voltage of the grid voltage may be set to about -800 V.

When the grid voltage is sufficiently greater than the cathode voltage in a negative direction, an electric field formed by the grid 120 may act as a repulsive force on the electron beam. Accordingly, as illustrated in FIG. 3, the electron beam may be blocked from passing through the grid 120.

FIG. 4 illustrates a state in which the second voltage is applied to the grid 120. As in the above-described example, the second voltage of the grid voltage may be set to about -530 V when the cathode voltage is -500 V and the anode voltage is 100 kV.

A voltage range of the grid voltage may be variously set according to a distance between the cathode 110 and the anode 130, a distance between the cathode 110 and the grid 120, a magnitude of a voltage, an area, or the like. For example, although the cathode 110 and the grid 120 may be disposed close to each other by about 0.1 mm, the distance is not limited thereto, and may be variously modified according to design specifications.

When the first voltage is applied as illustrated in FIG. 3, the electron beam may be blocked, thereby preventing generation of X-rays, and, when the second voltage is applied as illustrated in FIG. 4, the electron beam may be focused and projected toward the anode 130. Accordingly, on/off control of whether X-rays are generated may be easily performed without on/off control of the X-ray inspection apparatus itself. In conventional equipment, when the X-ray inspection apparatus is turned on, on/off control at a level of several Hz to several hundred Hz is not possible. Accordingly, a life span of the target may be shortened and thus the X-ray tube itself needs to be frequently replaced, or an influence of radiation exposure may also be very significant. In addition, in a case where the object to be inspected moves, when an X-ray exposure time is long, an afterimage may remain in an X-ray image, thereby reducing quality of the X-ray image. However, according to the present embodiment, on/off control may be rapidly performed. Accordingly, a high-quality image may be secured even for a moving object, a life span of the target may be extended by minimizing unnecessary generation of X-rays, and radiation exposure may also be minimized.

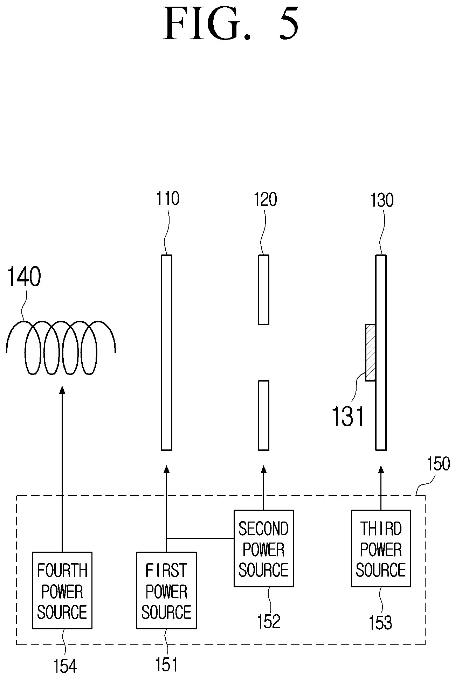

FIG. 5 is a view illustrating an example of a configuration of the power source unit used in the X-ray inspection apparatus according to an embodiment of the present disclosure.

Referring to FIG. 5, the power source unit 150 may include first to fourth power sources 151, 152, 153, and 154.

The first power source 151 may be connected to the cathode 110, and the second power source 152 may be connected to a node between the first power source 151 and the grid 120. The third power source 153 may be connected to the anode 130, and the fourth power source 154 may be connected to the heater 140. The second power source 152 may provide a variable voltage within a predetermined voltage range. Accordingly, the grid voltage may be a voltage having a magnitude obtained by summing a voltage of the first power source and a voltage of the second power source.

As in the above-described example, when the cathode voltage is -500 V, the anode voltage is 100 kV, and the grid voltage is controlled within a range of -800 V to -530 V, the second power source 152 may be configured as a power source providing a variable voltage within a range of about -300 V to -30 V. As a result, a voltage in a range of -800 V to -530 V, obtained by summing the voltage value of the first power source 151 and the voltage value of the second power source 152, may be applied to the grid 120.

In the above-described examples, although a case in which a high voltage is applied to the anode is described, the present disclosure is not necessarily limited thereto, and a magnitude of a voltage applied to the anode or the cathode may be variously changed. For example, the high voltage may be applied to the cathode, or may be applied to both the anode and the cathode.

A range of a voltage scale to be controlled may be reduced by implementing the grid voltage as a floating voltage relative to the cathode voltage. Accordingly, on/off control at short time intervals may be easier. Although FIG. 5 illustrates the second power source 152 providing a voltage having a variable magnitude, the present disclosure is not limited thereto, and a voltage provision range may also be variously changed by using a plurality of power sources and at least one switch.

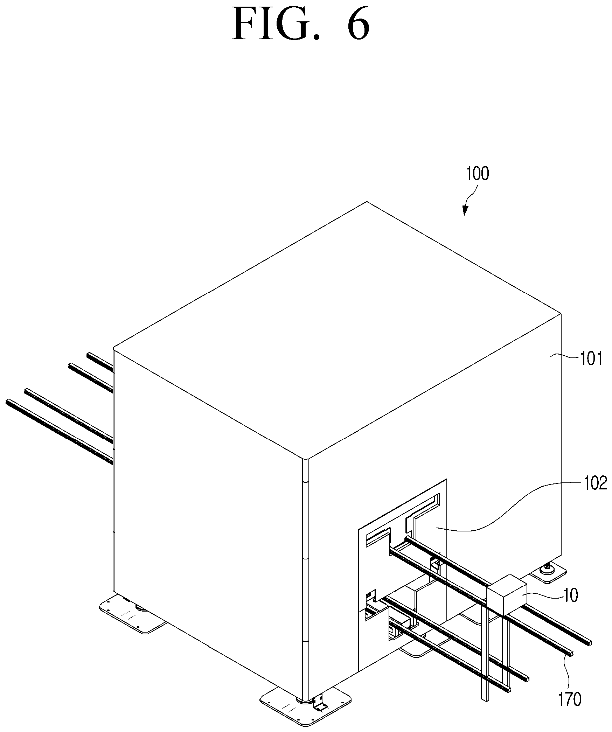

Meanwhile, the X-ray inspection apparatus may be used in various fields such as industrial nondestructive inspection and medical projection imaging. When the X-ray inspection apparatus is used for industrial nondestructive inspection, inspection may be performed during conveyance while conveying a plurality of objects to be inspected to rapidly inspect the plurality of objects to be inspected. FIG. 6 illustrates an example of the X-ray inspection apparatus performing inspection while conveying an object to be inspected.

Referring to FIG. 6, the X-ray inspection apparatus 100 may further include a conveyor belt 170 for conveying an object 10 to be inspected. The object 10 to be inspected may be conveyed to an interior through an inlet 102 formed in a housing 101 of the X-ray inspection apparatus 100 while being placed on the conveyor belt 170. Although FIG. 6 illustrates a state in which one object 10 to be inspected is placed on the conveyor belt 170, a plurality of objects 10 to be inspected may also be sequentially placed on the conveyor belt 170 and sequentially input to the X-ray inspection apparatus 100.

The control unit 160 may wait in a state in which predetermined voltages are applied to the heater 140, the cathode 110, and the anode 130, respectively, and the first voltage is applied to the grid 120. When the object 10 to be inspected is conveyed to an inspection position, the control unit 160 may control the power source unit 150 to apply the second voltage to the grid 120. The control unit 160 may control the power source unit 150 to alternately adjust the grid voltage to the first voltage and the second voltage during a section in which the object 10 to be inspected passes through the inspection position. Accordingly, the control unit 160 may capture a plurality of X-ray images.

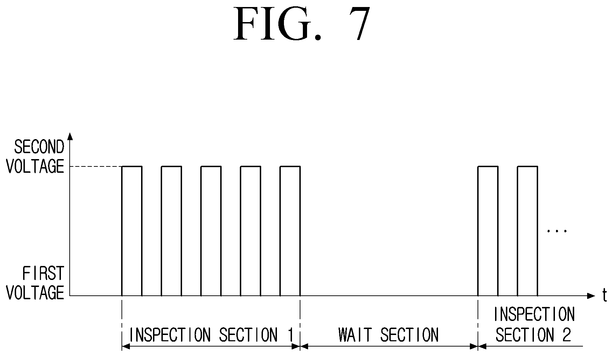

FIG. 7 is a view illustrating an operation of the X-ray inspection apparatus. Referring to FIG. 7, during an inspection section 1 until a first object to be inspected reaches and passes through the inspection position, the control unit 160 may control the power source unit 150 to alternately apply the first voltage and the second voltage. Then, until the next object to be inspected reaches the inspection position, the control unit 160 may wait in a state in which the first voltage for blocking generation of X-rays is applied to the grid 120. Then, when the next object to be inspected reaches the inspection position, the control unit 160 may control the power source unit 150 to again alternately adjust the magnitude of the voltage during an inspection section 2.

In the above description, a case in which the first voltage and the second voltage are alternately provided is described. However, if necessary, the X-ray inspection apparatus may also adjust an amount of the electron beam by applying, to the grid, a voltage having a magnitude within a range between the first voltage and the second voltage.

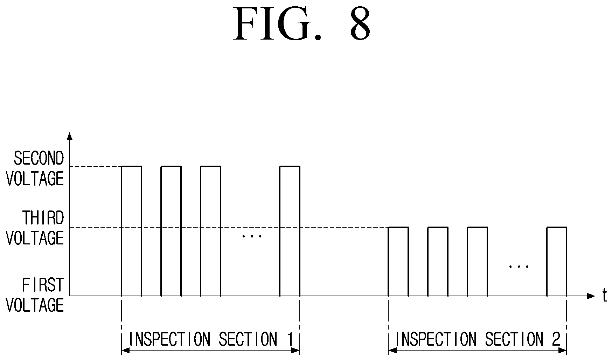

FIG. 8 illustrates a case in which the first voltage and the second voltage are alternately applied during the first inspection section 1, and the first voltage and the third voltage are alternately applied during the second inspection section 2. The control unit 160 may selectively adjust a magnitude of the grid voltage according to a size, a type, a material, a form, or the like of an object to be inspected.

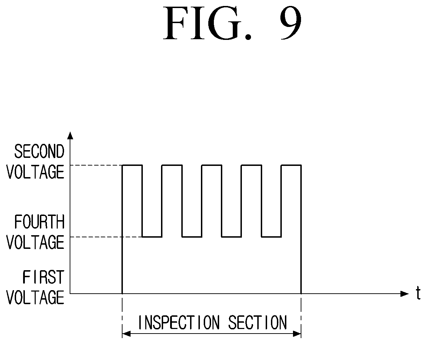

Meanwhile, during inspection, capturing an image may also be performed while adjusting an amount of the electron beam without completely blocking the electron beam. FIG. 9 illustrates a case of adjusting an amount of the electron beam during an inspection section.

Referring to FIG. 9, when an inspection section starts, the control unit 160 may control the power source unit 150 to apply the second voltage to the grid 120 while the first voltage is applied thereto, and then control the power source unit 150 to alternately apply the second voltage and a fourth voltage. Then, during a wait time, the control unit 160 may control the power source unit 150 to apply the first voltage again.

Meanwhile, when an object to be inspected is a human body, chest thickness may vary during inhalation and exhalation. Accordingly, the control unit 160 may perform control to generate different amounts of X-rays during inhalation and exhalation to accurately capture an image.

Specifically, the control unit 160 may control the power source unit 150 to alternately adjust the grid voltage within the predetermined voltage range based on a respiration cycle of a human body, which is an object to be inspected. In the above-described example, the grid voltage may be alternately provided between -800 V and -530 V. However, the present disclosure is not necessarily limited thereto, and a magnitude range of the grid voltage may be determined as an appropriate magnitude based on a magnitude range of a voltage applied to at least one of the anode and the cathode. A cycle of inhalation and exhalation may be directly input by an inspector or may be identified based on a sensing value of at least one sensor attached to an object to be inspected.

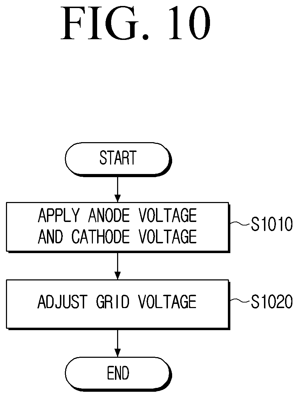

FIG. 10 is a flowchart illustrating an inspection method according to various embodiments of the present disclosure. Referring to FIG. 10, in a state in which an anode voltage of a predetermined magnitude and a cathode voltage of a predetermined magnitude are applied to the anode and the cathode, respectively (S1010), a grid voltage within a predetermined voltage range may be selectively applied to the grid positioned between the cathode and the anode (S1020). Accordingly, an amount of the electron beam emitted from the cathode and transferred toward the anode may be adjusted.

The adjusting of the amount of the electron beam by adjusting the grid voltage (S1020) may be performed within a voltage range between a first voltage for blocking the electron beam and a second voltage for allowing the electron beam to pass. A voltage range of the grid voltage and structures and operations of the anode, the grid, the cathode, or the like are specifically described in the various embodiments described above, and redundant descriptions thereof are thus omitted.

The above-described inspection method may be performed by the X-ray inspection apparatus including the configurations described in the various embodiments described above. However, the present disclosure is not necessarily limited thereto, and the inspection method may also be performed by an inspection apparatus having various other configurations.

As described above, according to the various embodiments of the present disclosure, control of whether X-rays are generated may be easily and rapidly performed without on/off control of the X-ray inspection apparatus itself. Accordingly, X-rays may be generated only during actual capture of an image, thereby minimizing an amount of radiation exposure of a person or an article. In addition, a lifespan of the target or the X-ray tube may also be extended as much as possible. In addition, inspection of a moving article may be performed more precisely. Accordingly, inspection of a plurality of products may be performed rapidly and accurately.

The above description is merely illustrative of the technical idea of the present disclosure, and various modifications and variations may be made by those skilled in the art to which the present disclosure pertains without departing from the essential characteristics of the present disclosure. In addition, the embodiments according to the present disclosure are not intended to limit the technical idea of the present disclosure and are intended to describe the present disclosure, and the scope of the technical idea of the present disclosure is not limited by these embodiments. Accordingly, the scope of protection of the present disclosure should be construed based on claims set forth below, and all technical ideas within a scope equivalent thereto should be construed as being included within the scope of rights of the present disclosure.

## Claims

1. An X-ray inspection apparatus comprising:
an anode on which a target is installed;
a cathode for emitting an electron beam to the target;
a grid positioned between the cathode and the anode and closer to the cathode;
a power source unit configured to apply voltages to the cathode, the grid, and the anode, respectively; and
a control unit,
wherein the control unit is configured to
control the power source unit to apply a cathode voltage of a predetermined magnitude to the cathode and to apply an anode voltage of a predetermined magnitude to the anode, and
control the power source unit to adjust an amount of the electron beam emitted from the cathode and transferred toward the anode by selectively applying a grid voltage within a predetermined voltage range to the grid.

2. The apparatus as claimed in claim 1, wherein the control unit is configured to adjust a magnitude of the grid voltage within a voltage range between a first voltage for blocking the electron beam and a second voltage for allowing the electron beam to pass,
the first voltage is a voltage having the same polarity as the cathode voltage and set to a magnitude at which the electron beam emitted from the cathode is blockable by a repulsive force generated by the grid, and
the second voltage is a voltage having the same polarity as the cathode voltage and set to a magnitude at which the electron beam emitted from the cathode is focused by a repulsive force generated by the grid and passes through the grid.

3. The apparatus as claimed in claim 2, further comprising:
a conveyor belt for conveying an object to be inspected,
wherein the control unit is configured to control the power source unit to alternately adjust the grid voltage to the first voltage and the second voltage during a section in which the object to be inspected passes through an inspection position, when the object to be inspected is conveyed to the inspection position by the conveyor belt in a state in which the cathode voltage is applied to the cathode and the anode voltage is applied to the anode.

4. The apparatus as claimed in claim 1, wherein the control unit is configured to control the power source unit to alternately adjust the grid voltage within the predetermined voltage range based on a respiration cycle of a human body, which is an object to be inspected.

5. The apparatus as claimed in claim 1, wherein the power source unit includes:
a first power source connected to the cathode;
a second power source connected to a node between the first power source and the grid; and
a third power source connected to the anode,
the second power source is a power source for providing a variable voltage within the predetermined voltage range, and
the grid voltage is a voltage having a magnitude obtained by summing a voltage of the first power source and a voltage of the second power source.

6. An inspection method for an X-ray inspection apparatus, the method comprising:
applying an anode voltage of a predetermined magnitude and a cathode voltage of a predetermined magnitude to an anode and a cathode, respectively; and
adjusting an amount of an electron beam emitted from the cathode and transferred toward the anode by selectively applying a grid voltage within a predetermined voltage range to a grid positioned between the cathode and the anode and closer to the cathode.

7. The method as claimed in claim 6, wherein the adjusting of the amount of the electron beam includes adjusting a magnitude of the grid voltage within a voltage range between a first voltage for blocking the electron beam and a second voltage for allowing the electron beam to pass,
the first voltage is a voltage having the same polarity as the cathode voltage and set to a magnitude at which the electron beam emitted from the cathode is blockable by a repulsive force generated by the grid, and
the second voltage is a voltage having the same polarity as the cathode voltage and set to a magnitude at which the electron beam emitted from the cathode is focused by a repulsive force generated by the grid and passes through the grid.

8. The method as claimed in claim 7, wherein the adjusting of the amount of the electron beam includes alternately adjusting the grid voltage to the first voltage and the second voltage during a section in which the object to be inspected passes through an inspection position, when the object to be inspected is conveyed to the inspection position by a conveyor belt in a state in which the cathode voltage is applied to the cathode and the anode voltage is applied to the anode.

9. The method as claimed in claim 6, wherein the adjusting of the amount of the electron beam includes alternately adjusting the grid voltage within the predetermined voltage range based on a respiration cycle of a human body, which is an object to be inspected.
